# EUROPÄISCHE PATENTANMELDUNG

(11) **EP 2 071 432 A2**
(43) Veröffentlichungstag der Anmeldung: **17.06.2009**
(21) Anmeldenummer: 08105907.3
(22) Anmeldetag: 02.12.2008
(51) Int. Cl.: G06F 3/033, G06F 3/01

(54) **Bedienvorrichtung für ein Hausgerät, ein Hausgerät mit einer Bedienvorrichtung, sowie ein Verfahren zum Bedienen eines Hausgeräts**

(30) Priorität: 13.12.2007 DE 102007060007
(71) Anmelder: BSH Bosch und Siemens Hausgeräte GmbH, 81739 München (DE)
(72) Erfinder: Gabler, Claudia, 93057, Regensburg (DE); Gabler, Michael, 93047, Regensburg (DE); Reinker, Bernward Maria, 93128, Regenstauf (DE); Werkmann, Horst, 85276, Pfaffenhofen/Ilm (DE)

(57) **Zusammenfassung**

Der Erfindung liegt das Problem zugrunde, eine benutzerfreundliche Bedienung eines Hausgeräts zu gewährleisten. Hierzu wird eine Bedienvorrichtung (2) für ein Hausgerät (1) vorgeschlagen, mit einer tragbaren Bedieneinheit (3) zum Bedienen des Hausgeräts (1), und mit einer hausgeräteseitigen Einheit (4), welche zur Kommunikation mit der tragbaren Bedieneinheit (3) ausgebildet ist, wobei die tragbare Bedieneinheit (3) einen Beschleunigungssensor (7) aufweist, mittels welchem eine spezifische Bewegung der tragbaren Bedieneinheit (3) detektierbar ist, und die hausgeräteseitige Einheit (4) abhängig von einem Empfangen eines Signals von der Bedieneinheit (3) dazu ausgelegt ist, eine der Bewegung der Bedieneinheit (3) zugeordnete Funktion des Hausgeräts (1) einzuleiten oder durchzuführen. Darüber hinaus betrifft die Erfindung ein Hausgerät (1) mit einer derartigen Bedienvorrichtung (2) sowie ein entsprechendes Verfahren.

## Beschreibung

Die vorliegende Erfindung betrifft eine Bedienvorrichtung für ein Hausgerät sowie ein Hausgerät mit einer solchen Bedienvorrichtung. Überdies betrifft die vorliegende Erfindung ein Verfahren zum Bedienen eines Hausgeräts.

Bedienvorrichtungen für Hausgeräte sind aus dem Stand der Technik in vielfältiger Weise bekannt. In unterschiedlicher Ausgestaltung werden Bedienvorrichtungen üblicherweise im Hausgerät derart angeordnet, dass ein Einstellen von Betriebsbedienungen des Hausgeräts über von einer Bedienperson betätigbare Bedienelemente erfolgt, welche fest am Hausgerät angeordnet sind. An den aus dem Stand der Technik bekannten Bedienvorrichtungen für Hausgeräte ist als nachteilig der Umstand anzusehen, dass diese eine Anwesenheit der Bedienperson unmittelbar am Hausgerät erfordern, um das Einstellen von Betriebsbedienungen des Hausgeräts durchführen zu können.

Es ist Aufgabe der vorliegenden Erfindung, eine benutzerfreundliche und flexiblere Bedienung eines Hausgeräts zu ermöglichen.

Diese Aufgabe wird erfindungsgemäß durch eine Bedienvorrichtung mit den Merkmalen gemäß Patentanspruch 1, durch ein Hausgerät mit den Merkmalen gemäß Patentanspruch 11, sowie durch ein Verfahren mit den Merkmalen gemäß Patentanspruch 12 gelöst. Vorteilhafte Ausgestaltungen mit zweckmäßigen Weiterbildungen der Erfindung sind in den Unteransprüchen angegeben.

Eine erfindungsgemäße Bedienvorrichtung für ein Hausgerät umfasst eine tragbare Bedieneinheit zum Bedienen des Hausgeräts und eine hausgeräteseitige Einheit, welche zur Kommunikation mit der tragbaren Bedieneinheit ausgebildet ist. Dabei weist die tragbare Bedieneinheit einen Beschleunigungssensor auf, mittels welchem eine spezifische Bewegung der tragbaren Bedieneinheit detektierbar ist. Die hausgeräteseitige Einheit ist abhängig von einem Empfangen eines Signals von der Bedieneinheit dazu ausgelegt, eine der Bewegung der Bedieneinheit zugeordnete Funktion des Hausgeräts einzuleiten oder durchzuführen.

Eine Funktion kann beispielsweise die Auswahl einer Betriebsfunktion des Hausgeräts sein, es kann jedoch auch die Einstellung eines Betriebsparameters einer Betriebsfunktion sein.

Mit anderen Worten wird der Bedienvorrichtung eine tragbare Bedieneinheit zur Auswahl und/oder Einstellung von Betriebsbedienungen des Hausgeräts zugeordnet, welche einen Beschleunigungssensor umfasst, der zur Detektion der Bewegung der Bedieneinheit ausgebildet ist, wobei zumindest einer spezifischen Bewegung der Bedieneinheit eine spezifische Auswahl und/oder Einstellung einer Betriebsbedingung bzw. einer Funktion des Hausgeräts zugeordnet ist. Dabei ist die tragbare Bedieneinheit zur Kommunikation mit einer hausgeräteseitigen Einheit ausgebildet, durch welche abhängig von einem Empfangen eines Signals von der Bedieneinheit die Auswahl und/oder Einstellung der spezifischen Betriebsbedienung einleitbar oder durchführbar ist. Unter dem Begriff Hausgerät wird hier insbesondere ein elektrisches Gerät verstanden, das zur Haushaltsführung eingesetzt wird, insbesondere ein Hausgerät zur Zubereitung von Lebensmitteln, wie beispielsweise ein Backofen, oder ein Hausgerät zur Pflege von Wäschestücken, wie beispielsweise eine Waschmaschine, ein Trockner, oder ein Waschtrockner. In vorteilhafter Weise wird durch die erfindungsgemäße Bedienvorrichtung ein benutzerfreundliches, intuitives und gestenunterstütztes Fernbedienen von Hausgeräten erzielt. Insbesondere durch Einsatz des Beschleunigungssensors wird gewährleistet, dass eine Funktion des Hausgeräts, beispielsweise eine Einstellung eines Betriebsparameters, durch ein bequemes "Ausdem-Handgelenk-Schütteln" ausgeführt werden kann. So kann beispielsweise eine relative Wertverstellung eines Betriebsparameters des Hausgeräts aufgrund einer Bewegung der tragbaren Bedieneinheit derart erfolgen, dass ein Bewegen der tragbaren Bedieneinheit aufwärts ein Steigen des Betriebsparameters und ein Bewegen der tragbaren Bedieneinheit abwärts ein Absenken des Betriebsparameters zur Folge hat.

Die Bedieneinheit ist ein zum Hausgerät separates Teil und relativ zum Hausgerät bewegbar.

Vorzugsweise ist das Signal mittels des Beschleunigungssensors erzeugbar und die spezifische Bewegung durch das Signal charakterisiert. Insbesondere ist die hausgeräteseitige Einheit dazu ausgelegt, das die spezifische Bewegung charakterisierende Signal in ein die spezifische Funktion charakterisierendes Signal zu verarbeiten und die der spezifischen Bewegung zugeordnete Funktion des Hausgeräts aufgrund des Signals einzuleiten oder durchzuführen. Hierdurch wird erreicht, dass keine aufwändige Signalverarbeitung in der tragbaren Bedieneinheit erfolgen muss, wodurch eine bauteilreduzierte tragbare Bedieneinheit geschaffen wird.

Alternativ kann vorgesehen sein, dass die tragbare Bedieneinheit eine Signalverarbeitungseinheit aufweist, welche abhängig von dem die spezifische Bewegung charakterisierenden Signal zur Erzeugung eines die Funktion des Hausgeräts als Information aufweisenden Signals ausgebildet ist. Insbesondere kann die hausgeräteseitige Einheit dann dazu ausgelegt sein, aufgrund eines Empfangens des die Funktion des Hausgeräts charakterisierenden Signals diese Funktion einzuleiten oder durchzuführen.

Das Hausgerät kann eine Aufbewahrungseinrichtung für die Bedieneinheit aufweisen. Diese kann beispielsweise eine Vertiefung zum Einstecken, Einlegen oder dergleichen von der Bedieneinheit sein. Dadurch ist die Bedieneinheit im nicht benötigten Zustand aufgeräumt und an einem definierten Ort positioniert, wodurch sie bei Bedarf leicht aufgefunden werden kann.

In einer Ausführungsform ist der Beschleunigungssensor als dreidimensionaler Beschleunigungssensor ausgebildet. In vorteilhafter Weise wird somit im Hinblick auf die Genauigkeit der Bewegungsdetektion erreicht, dass jede Art der Bewegung der tragbaren Bedieneinheit erfasst werden kann. Hierdurch wird darüber hinaus hinsichtlich der Bedienung des Hausgeräts ein Ausführen von vielen unterschiedlichsten Funktionen des Hausgeräts mithilfe der tragbaren Bedieneinheit ermöglicht. Es kann vorgesehen sein, die tragbare Bedieneinheit derart auszubilden, dass eine Absolutwertverstellung eines Betriebsparameters des Hausgeräts aufgrund der Stellung der tragbaren Bedieneinheit im Raum erfolgt.

Vorzugsweise weist die hausgeräteseitige Einheit eine erste Schnittstelle und die tragbare Bedieneinheit eine zweite Schnittstelle auf, über welche das Signal drahtlos übertragbar ist, wobei die Schnittstellen in einer Ausführungsform zur Kommunikation nach einem kurzreichweitigen Kommunikationsstandard, insbesondere nach dem Bluetooth-Standard, ausgebildet sind. Hierdurch wird im Hinblick auf die benutzerfreundliche Bedienung des Hausgeräts erreicht, dass beim Fernbedienen des Hausgeräts kein "line of sight", also keine Sichtverbindung zwischen dem Hausgerät und der tragbaren Bedieneinheit, zur Datenübertragung erforderlich ist.

In einer alternativen Ausführungsform ist eine die hausgeräteseitige Einheit und die tragbare Bedieneinheit verbindende Signalleitung vorgesehen, über welche das Signal übertragbar ist. Insbesondere kann die tragbare Bedieneinheit über diese oder eine separate Leitung mit elektrischer Energie von Seiten des Hausgeräts versorgt werden, so dass keine externe Energiequelle, insbesondere keine Batterie, notwendig ist.

In einer Ausführungsform umfasst die tragbare Bedieneinheit ein Betätigungselement, insbesondere einen Drückschalter und/oder einen Drehschalter und/oder einen Dreh/Drückschalter zum Ausführen einer Funktion des Hausgeräts. Insbesondere ist das Betätigungselement an der Bedieneinheit ergonomisch angeordnet, so dass eine besonders benutzerfreundliche Bedienung des Hausgeräts gewährleistet wird. So kann mittels des Betätigungselements eine Betriebsbedingung des Hausgeräts auf einfache und schnelle Weise direkt ausgewählt bzw. eingestellt werden. Darüber hinaus wird hierdurch erreicht, dass mehrere Funktionen des Hausgeräts, beispielsweise eine Auswahl einer Betriebsfunktion und ein Einstellen eines Betriebsparameters der Betriebsfunktion gleichzeitig, einerseits über ein Betätigen des Betätigungselements und andererseits durch ein Bewegen der tragbaren Bedieneinheit, erfolgen kann. Es kann vorgesehen sein, mittels des Betätigungselements zunächst eine Betriebsfunktion des Hausgeräts auszuwählen, und anschließend durch eine Bewegung der tragbaren Bedieneinheit einen Betriebsparameter der Betriebsfunktion einzustellen. Überdies können ein "Gedrückthalten" des Betätigungselements und die Bewegung der tragbaren Bedieneinheit zumindest zeitweise gleichzeitig erfolgen. Während dem Bewegen der Bedieneinheit ist dann das Betätigungselement von der Bedienperson weiter aktiv betätigt, beispielsweise gedrückt.

Vorzugsweise weist die tragbare Bedieneinheit ein Display auf, mittels welchem insbesondere eine aktuell gewählte Funktion des Hausgeräts anzeigbar ist. Diese Ausführungsform zeigt sich dann besonders vorteilhaft, wenn kein direkter Sichtkontakt von der tragbaren Bedieneinheit zum Hausgerät besteht. Insbesondere kann an dem Display der Wert eines aktuell auszuwählenden Betriebsparameters des Hausgeräts angezeigt werden. Fehlbedienungen oder dergleichen können dadurch verhindert werden. Auch hohen Sicherheitsanforderungen kann dadurch Rechnung getragen werden.

In einer vorteilhaften Ausgestaltung weist die tragbare Bedieneinheit eine Haptikeinrichtung auf, welche zur situationsspezifischen Erzeugung eines auf eine Bedienperson haptisch einwirkenden Signals ausgebildet ist. Insbesondere kann das Signal ein Warnsignal oder ein Informationssignal sein. Es kann vorgesehen sein, dass ein haptisches Feedback, insbesondere eine Vibration der tragbaren Bedieneinheit, z. B. beim Erreichen eines Maxial- bzw. Minimalwerts eines Betriebsparameters des Hausgeräts, oder als Bestätigung einer aktivierten Betriebsfunktion des Hausgeräts abgegeben wird. Alternativ oder zusätzlich kann die tragbare Bedieneinheit eine Schallquelle, insbesondere einen Lautsprecher, aufweisen, mittels welchem ein akustisches Signal erzeugbar ist. So können die Informationen über Einstellung eines Betriebsparameters und/oder über Auswahl einer Betriebsfunktion zusätzlich oder alternativ akustisch abgegeben werden.

Bei einem erfindungsgemäßen Verfahren wird ein Hausgerät mit einer Bedienvorrichtung bedient. Dabei weist die Bedienvorrichtung eine tragbare Bedieneinheit und eine hausgeräteseitige Einheit auf, die zur Kommunikation miteinander ausgebildet sind. Bei dem Verfahren wird mittels eines Beschleunigungssensors eine spezifische Bewegung der tragbaren Bedieneinheit detektiert, wobei die hausgeräteseitige Einheit abhängig von einem Empfangen eines Signals von der Bedieneinheit eine der spezifischen Bewegung zugeordnete Funktion des Hausgerät einleitet oder durchführt.

Vorzugsweise wird bei dem Verfahren das Signal mittels des Beschleunigungssensors erzeugt und die spezifische Bewegung durch das Signal charakterisiert. Alternativ kann vorgesehen sein, dass die der spezifischen Bewegung zugeordnete Funktion des Hausgeräts durch das Signal charakterisiert wird.

In einer Ausführungsform des Verfahrens wird die tragbare Bedieneinheit dreidimensional bewegt, um Funktionen des Hausgeräts auswählen und/oder einstellen zu können.

Vorzugsweise wird das Signal drahtlos und in bevorzugter Weise nach einem kurzreichweitigen Kommunikationsstandard, insbesondere nach dem Bluetooth-Standard, übertragen. Alternativ kann das Signal über eine Signalleitung drahtgebunden übertragen werden.

Bei dem Verfahren kann eine weitere Funktion des Hausgeräts mittels eines Betätigungselements, insbesondere eines Drückschalters und/oder eines Drehschalters und/oder eines Dreh-/Drückschalters, der tragbaren Bedieneinheit durchgeführt werden.

Vorzugsweise wird eine aktuell gewählte Funktion des Hausgeräts an einem Display der tragbaren Bedieneinheit angezeigt.

In einer Ausführungsform des Verfahrens wird ein auf eine Bedienperson der tragbaren Bedieneinheit haptisch einwirkendes Signal situationsspezifisch erzeugt. Insbesondere kann zusätzlich oder alternativ ein akustisches und/oder optisches Signal erzeugt werden. Das Signal kann dabei beispielsweise ein Warnsignal oder auch ein Informationssignal sein.

Vorzugsweise wird bei dem Verfahren durch Betätigen eines Betätigungselements der tragbaren Bedieneinheit eine Betriebsfunktion des Hausgeräts ausgewählt und durch Durchführen einer spezifischen Bewegung der Bedieneinheit ein Betriebsparameter dieser Betriebsfunktion eingestellt. Dabei kann vorgesehen sein, dass das Betätigen des Betätigungselements und das Bewegen der Bedieneinheit zumindest zeitweise gleichzeitig ausgeführt werden. Alternativ kann das Betätigen des Betätigungselements vor dem Bewegen der Bedieneinheit abgeschlossen werden.

Vorteilhafte Ausgestaltungen der erfindungsgemäßen Bedienvorrichtung und insbesondere deren Vorteile sind als vorteilhafte Ausführungen des erfindungsgemäßen Verfahrens anzusehen.

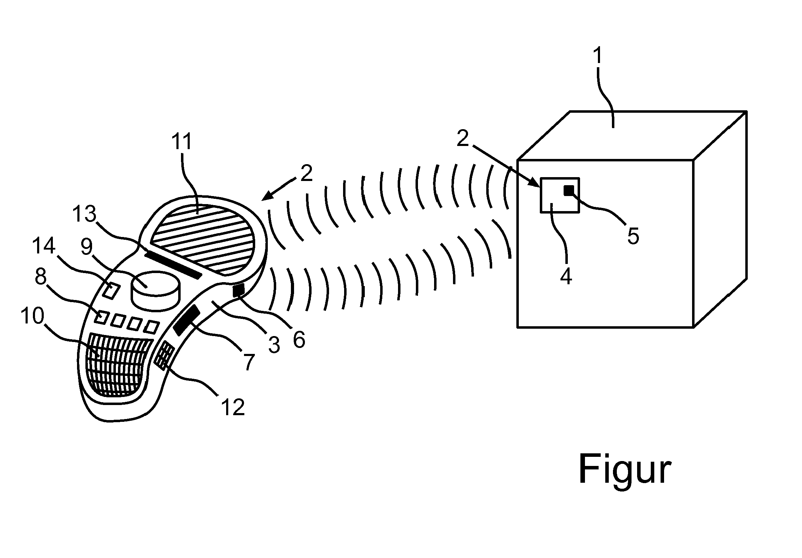

Weitere Vorteile, Merkmale und Einzelheiten der Erfindung ergeben sich aus der nachfolgenden Beschreibung eines bevorzugten Ausführungsbeispiels, sowie anhand der Zeichnung.

Die einzige Figur zeigt in schematischer Darstellung ein Hausgerät mit einer Bedienvorrichtung gemäß einer Ausführungsform der Erfindung.

Ein in der Figur dargestelltes Hausgerät 1 umfasst eine Bedienvorrichtung 2, welche zum Bedienen des Hausgeräts 1 ausgebildet ist. Das Hausgerät 1 kann vorliegend beispielsweise ein Hausgerät zur Zubereitung von Lebensmitteln, wie beispielsweise ein Backofen, ein Mikrowellengerät, oder ein Hausgerät zur Pflege von Wäschestücken, wie beispielsweise eine Waschmaschine, ein Trockner, oder ein Wäschetrockner, sein.

Die Bedienvorrichtung 2 weist eine tragbare Bedieneinheit 3 sowie eine am Hausgerät 1 angeordnete hausgeräteseitige Einheit 4 auf, welche zur Kommunikation miteinander ausgebildet sind. Dabei ist die tragbare Bedieneinheit 3 zur Fernbedienung des Hausgeräts 1 und als separates Bauteil zum Hausgerät 1 ausgebildet. Die hausgeräteseitige Einheit 4 weist eine erste Schnittstelle 5 und die tragbare Bedieneinheit 3 eine zweite Schnittstelle 6 auf, welche nach einem kurzreichweitigen Kommunikationsstandard, wie beispielsweise nach dem Bluetooth-Standard, ausgebildet sind. Vorliegend ist im Ausführungsbeispiel somit eine bidirektionale sowie drahtlose Kommunikation zwischen der hausgeräteseitigen Einheit 4 und der tragbaren Bedieneinheit 3 gegeben.

Die tragbare Bedieneinheit 3 weist einen Beschleunigungssensor 7 auf, welcher vorliegend als dreidimensionaler Beschleunigungssensor ausgebildet ist. Der Beschleunigungssensor 7 ist dabei in der Lage, jede Bewegung der tragbaren Bedieneinheit 3 zu detektieren, und aufgrund der Bewegung ein diese Bewegung charakterisierendes Signal zu erzeugen. Dabei wird in einem aktivierbaren Bedienmodus jede spezifische Bewegung der tragbaren Bedieneinheit 3 einer Funktion des Hausgeräts 1 zugeordnet. So ist vorliegend die hausgeräteseitige Einheit 4 dazu ausgelegt, das von der Bedieneinheit 3 empfangene und die spezifische Bewegung charakterisierende Signal in ein die der spezifischen Bewegung zugeordnete Funktion des Hausgeräts 1 wiedergebendes Signal zu verarbeiten, und diese Funktion des Hausgeräts einzuleiten bzw. durchzuführen. Alternativ kann vorgesehen sein, dass die tragbare Bedieneinheit 3 eine Signalverarbeitungseinheit 14 aufweist, welche in der Lage ist, das mittels des Beschleunigungssensors 7 erzeugte Signal in ein die entsprechende Funktion des Hausgeräts 1 als Information enthaltendes Signal umzurechnen.

Die tragbare Bedieneinheit 3 umfasst beispielhaft ferner eine Gruppe von Betätigungselementen, vorliegend vier Drückschalter 8, einen Drehschalter 9, sowie ein Touchpad 10. Diese Betätigungselemente dienen zum Einstellen von Betriebsbedienungen des Hausgeräts, wie z. B. zum Auswählen einer Betriebsfunktion bzw. zum Einstellen eines Betriebsparameters des Hausgeräts 1. Anzahl, Art und Position der Betätigungselemente ist lediglich beispielhaft und es kann auch eine andere Ausgestaltung vorgesehen sein.

Darüber hinaus weist die tragbare Bedieneinheit 3 ein Display 11 auf, an welchem Informationen über aktuell gewählte Betriebsfunktionen und/oder aktuell eingestellte Betriebsparameter des Hausgeräts 1 angezeigt werden. Zusätzlich umfasst die tragbare Bedieneinheit 3 einen Lautsprecher 12, mittels welchem diese Informationen akustisch abgegeben werden. Der Einsatz sowohl des Displays 11 als auch des Lautsprechers 12 ist dann besonders vorteilhaft, wenn eine bidirektionale Datenübertragung zwischen der hausgeräteseitigen Einheit 4 und der tragbaren Bedieneinheit 3 stattfindet. Denn dann können hausgeräteseitige Informationen durch die Bedieneinheit 3 an eine Bedienperson ausgegeben werden. Selbstverständlich können auf dem Display 11 auch Betriebszustände der Bedieneinheit 3, beispielsweise der Ladezustand einer Energiequelle (Batterie), Fehlzustände der Bedieneinheit 3 und dergleichen, angezeigt werden.

Vorliegend sei erwähnt, dass das Display 11 als ein LCD-Display (Liquid Cristal Display) oder als ein OLED-Display (Organic Light Emitting Diode) ausgebildet sein kann. Zum Abgeben von Informationen über die aktuell gewählte Betriebsfunktion bzw. über einen aktuell eingestellten Betriebsparameter des Hausgeräts 1, umfasst die tragbare Bedieneinheit 3 darüber hinaus eine Haptikeinrichtung 13, mittels welcher ein auf eine Bedienperson der tragbaren Bedieneinheit 3 haptisch einwirkendes Signal erzeugbar ist. Es kann vorgesehen sein, dass durch ein haptisches Feedback, wie beispielsweise eine Vibration der tragbaren Bedieneinheit 3, ein Erreichen eines Maximal- bzw. Minimalwerts eines Betriebsparameters bzw. eine Bestätigung einer aktuell aktivierten Betriebsfunktion des Hausgeräts 1 signalisiert wird. Der Einsatz der intelligenten Haptikeinrichtung 13 wird auch hier dadurch ermöglicht, dass die Kommunikation zwischen der hausgeräteseitigen Einheit 4 und der tragbaren Bedieneinheit 3 bidirektional ausgebildet ist.

Nachstehend wird eine beispielhafte Funktionsweise der tragbaren Bedieneinheit 3 näher erläutert. Wie bereits erwähnt, ist jeder spezifischen Bewegung der tragbaren Bedieneinheit 3 eine Auswahl bzw. Einstellung einer Betriebsbedienung des Hausgeräts 1 zugeordnet, wobei die spezifische Bewegung mittels des Beschleunigungssensors 7 detektiert wird. Möchte man eine Funktion des Hausgeräts 1 durchführen, beispielsweise einen Betriebsparameter einer Betriebsfunktion des Hausgeräts 1, z. B. eine Betriebstemperatur eines Garraums eines Backofens bei einem Garraumbetrieb, einstellen, so wird zunächst ein das Auswählen des Garraumbetriebs bewirkendes Betätigungselement, beispielsweise ein dem Garraumbetrieb zugeordneter Bereich des Touchpads 10, und anschließend ein das Einstellen des Werts der Betriebstemperatur freigebendes Betätigungselement, vorliegend beispielsweise einer der Drückschalter 8, betätigt. So wird durch das Betätigen der entsprechenden Betätigungselemente die Einstellung des Werts der Betriebstemperatur ermöglicht. Um nun den gewünschten Wert der Betriebstemperatur einzustellen, wird die tragbare Bedieneinheit 3 bewegt. Es kann vorgesehen sein, dass einem Steigen der Betriebstemperatur eine Bewegung der tragbaren Bedieneinheit aufwärts und einem Absenken der Betriebstemperatur eine Bewegung der Bedieneinheit 3 abwärts zugeordnet wird. Gleichzeitig wird an dem Display 11 und/oder akustisch mittels des Lautsprechers 12 der aktuelle Wert der Betriebstemperatur angezeigt bzw. angegeben. Wird der maximal bzw. minimal mögliche Wert der Betriebstemperatur erreicht, so wird mittels der Haptikeinrichtung 13 ein auf die Bedienperson haptisch einwirkendes Signal erzeugt und das Erreichen des maximalen bzw. des minimalen Werts haptisch angedeutet.

Die Erfindung ist nicht auf das in der Figur dargestellte Ausführungsbeispiel beschränkt. Alle vorstehend beschriebenen und in der Figur dargestellten Merkmale sind beliebig miteinander kombinierbar.

## Patentansprüche

1. Bedienvorrichtung (2) für ein Hausgerät (1), mit einer tragbaren Bedieneinheit (3) zum Bedienen des Hausgeräts (1), und mit einer hausgeräteseitigen Einheit (4), welche zur Kommunikation mit der tragbaren Bedieneinheit (3) ausgebildet ist, wobei die tragbare Bedieneinheit (3) einen Beschleunigungssensor (7) aufweist, mittels welchem eine spezifische Bewegung der tragbaren Bedieneinheit (3) detektierbar ist, und die hausgeräteseitige Einheit (4) abhängig von einem Empfangen eines Signals von der Bedieneinheit (3) dazu ausgelegt ist, eine der Bewegung der Bedieneinheit (3) zugeordnete Funktion des Hausgeräts (1) einzuleiten oder durchzuführen.

2. Bedienvorrichtung (2) nach Anspruch 1, bei welcher das Signal mittels des Beschleunigungssensors (7) erzeugbar ist, und die spezifische Bewegung durch das Signal charakterisiert ist.

3. Bedienvorrichtung (2) nach Anspruch 1, bei welcher die tragbare Bedieneinheit (3) eine Signalverarbeitungseinheit (14) aufweist, welche abhängig von dem die spezifische Bewegung charakterisierenden Signal zur Erzeugung eines die Funktion des Hausgeräts (1) als Information aufweisenden Signals ausgebildet ist.

4. Bedienvorrichtung (2) nach einem der Ansprüche 1 bis 3, bei welcher der Beschleunigungssensor (7) als dreidimensionaler Beschleunigungssensor ausgebildet ist.

5. Bedienvorrichtung (2) nach einem der vorhergehenden Ansprüche, bei welcher die hausgerätseitige Einheit (4) eine erste Schnittstelle (5) und die tragbare Bedieneinheit (3)eine zweite Schnittstelle (6) aufweist, über welche das Signal drahtlos übertragbar ist.

6. Bedienvorrichtung (2) nach Anspruch 5, bei welcher die Schnittstellen (5, 6) zur Kommunikation nach einem kurzreichweitigen Kommunikationsstandard, insbesondere nach dem Bluetooth-Standard, ausgebildet sind.

7. Bedienvorrichtung (2) nach einem der Ansprüche 1 bis 4, bei welcher die hausgerätseitige Einheit (4) und die tragbare Bedieneinheit (3) zur drahtgebundenen Kommunikation ausgebildet sind.

8. Bedienvorrichtung (2) nach einem der vorhergehenden Ansprüche, bei welcher die tragbare Bedieneinheit (3) ein Betätigungselement (8, 9, 10), insbesondere einen Drückschalter (8) und/oder einen Drehschalter (9) und/oder einen Dreh/Drückschalter, zum Ausführen einer Funktion des Hausgeräts umfasst.

9. Bedienvorrichtung (2) nach einem der vorhergehenden Ansprüche, bei welcher die tragbare Bedieneinheit (3) ein Display (11) aufweist.

10. Bedienvorrichtung (2) nach einem der vorhergehenden Ansprüche, bei welcher die tragbare Bedieneinheit (3) eine Haptikeinrichtung (13) aufweist, welche zur situationsspezifischen Erzeugung eines auf eine Bedienperson haptisch einwirkenden Signals ausgebildet ist.

11. Hausgerät (1) mit einer Bedienvorrichtung (2) nach einem der Ansprüche 1 bis 10.

12. Verfahren zum Bedienen eines Hausgeräts (1) mit einer Bedienvorrichtung (2), welche eine tragbare Bedieneinheit (3) und eine hausgeräteseitige Einheit (4) aufweist, die zur Kommunikation miteinander ausgebildet sind, wobei mittels eines der Bedieneinheit (3) zugeordneten Beschleunigungssensors (7) eine spezifische Bewegung der tragbaren Bedieneinheit (3) detektiert wird, und die hausgeräteseitige Einheit (4) abhängig von einem Empfangen eines Signals von der Bedieneinheit (3) eine der spezifischen Bewegung zugeordnete Funktion des Hausgeräts (1) einleitet oder durchführt.

13. Verfahren nach Anspruch 12, bei welchem das Signal mittels des Beschleunigungssensors (7) erzeugt wird, und die spezifische Bewegung durch das Signal charakterisiert wird.

14. Verfahren nach Anspruch 12, bei welchem die der spezifischen Bewegung zugeordnete Funktion des Hausgeräts durch das Signal charakterisiert wird.

15. Verfahren nach einem der Ansprüche 12 bis 14, bei welchem die Kommunikation zwischen der Bedieneinheit (3) und der hausgeräteseitigen Einheit (4) drahtlos durchgeführt wird.

16. Verfahren nach Anspruch 15, bei welchem das Signal nach einem kurzreichweitigen Kommunikationsstandard, insbesondere nach dem Bluetooth-Standard, übertragen wird.

17. Verfahren nach einem der Ansprüche 12 bis 16, bei welchem eine aktuell gewählte Funktion des Hausgeräts (1) an einem Display (11) der tragbaren Bedieneinheit (3) angezeigt wird.

18. Verfahren nach einem der Ansprüche 12 bis 17, bei welchem durch Betätigen eines Betätigungselements (8, 9, 10) der tragbaren Bedieneinheit (3) eine Betriebsfunktion des Hausgeräts (1) ausgewählt wird, und durch Durchführen einer spezifischen Bewegung der Bedieneinheit ein Betriebsparameter dieser Betriebsfunktion eingestellt wird.

19. Verfahren nach Anspruch 18, bei welchem das Betätigen des Betätigungselements (8, 9, 10) und das Bewegen der Bedieneinheit (3) zumindest zeitweise gleichzeitig ausgeführt werden.

20. Verfahren nach Anspruch 18, bei welchem das Betätigen des Betätigungselements (8, 9, 10) vor dem Bewegen der Bedieneinheit (3) abgeschlossen wird.
